# EUROPEAN PATENT SPECIFICATION

(11) **EP 4 440 880 B1**
(45) Date of publication and mention of the grant of the patent: **10.12.2025**
(21) Application number: 21823822.8
(22) Date of filing: 30.11.2021
(51) Int. Cl.: B60Q 1/00, F21S 43/245, F21V 8/00

(54) **VEHICLE LIGHTING DEVICE**
BELEUCHTUNGSEINRICHTUNG FÜR EIN FAHRZEUG
DISPOSITIF D'ÉCLAIRAGE DE VÉHICULE

(43) Date of publication of application: 09.10.2024
(73) Proprietor: HELLA Saturnus Slovenija d.o.o., 1001 Ljubljana (SI)
(72) Inventor: BERKOPEC, Bostjan, 8351 Straza (SI); BENSA, Gregor, 5000 Nova Gorica (SI); JEZERSEK, Nejc, 1230 Domzale (SI); LOKAR, Ursa, 1000 Ljubljana (SI)
(74) Representative: Behr-Wenning, Gregor
(86) International application number: PCT/EP2021/083475
(87) International publication number: WO 2023/098967

(56) References cited:
- EP-A1- 2 921 348
- EP-A2- 1 022 510
- DE-A1- 102015 204 303
- JP-A- 2016 051 532
- KR-A- 20130 039 576
- US-A1- 2015 292 704

## Description

The present invention relates to a vehicle lighting device featuring a main lighting module and a secondary lighting module with a light guide component.

### PRIOR ART

Vehicle lighting devices are increasingly equipped with lighting modules featuring light guide components, also called optical waveguides, with elongated extension as central lighting elements, the lateral surfaces of which are used for the outcoupling of light. For example, DE 10 2012 108 855 A1 discloses a light guide component for a vehicle lighting module with a light coupling section for coupling light into one or both ends of the light guide component and with a main section with a front side for light output and a rear side with outcoupling elements for deflecting the light towards the front side. The light guidance along the light guide component is in particular based on the principle of total reflection, and in the prior art it is common to form the outcoupling elements on the rear side of the light guide component, for example, in the shape of pyramids, ellipsoidal segments or other free-form bodies, or to realise the outcoupling elements by macroscopical roughness of the rear surface of the light guide component.

The document KR 2013 0039576 A discloses a vehicle lighting device with a first light source unit with associated reflector and lens for a primary lighting function, and a second light source unit with a light guide, wherein the front side of the light guide is curved, so that the light emitted from the second light source unit is totally reflected, and the rear side of the light guide is formed with a notch portion that reflects the total reflected light toward the front.

The document DE 10 2015 204303 A1 discloses a motor vehicle headlamp comprising: a housing in which at least one primary light source is arranged; at least one further light source; a heat sink for cooling the further light source; an at least partially transparent cover lens; an attachment housing, which is arranged in front of the outer side of the cover lens. It is provided that a light-conducting element is arranged in or on the attachment housing, which at least partially fills the interior of the attachment housing or forms at least part of a wall of the attachment housing, and which is designed to conduct light irradiated by means of the at least one further light source.

The document JP 2026 051532 A discloses a vehicle lamp comprising a light guide in which incident light is guided in a longitudinal direction and the guided light is emitted from a light exit surface, the light guide having a surface facing the light exit surface configured as a light reflecting surface, the light reflecting surface having an internal reflection step that reflects the guided light toward the light exit surface, the internal reflection step comprising a first reflection surface that reflects the guided light in a direction intersecting both the longitudinal direction of the light guide and the direction connecting the light exit surface and the light reflecting surface, and a second reflection surface that reflects the light reflected by the first reflection surface toward the light exit surface.

The document EP 1 022 510 A2 discloses a taillight system for an automotive vehicle, comprising: an assembly adapted for attachment to the vehicle; an optic manifold mounted within the assembly and having a front surface defining a light emitting area, an input section for receiving and dispersing light from a first light source in a general predetermined direction, and a back surface having a plurality of facets generally spaced apart in the general predetermined direction for redirecting light from the first light source through the front surface so as to provide illumination through the light emitting area; a second light source configured to provide illumination through a predetermined portion of the light illuminating area; and wherein the system has a plurality of illumination modes using either or both light sources.

In particular, the aesthetically pleasing appearance of illuminated light guide components is exploited for the individual design of lighting devices. For example, headlights are known in which a light guide component runs around a main lighting module, in particular a low beam or high beam module, forming a distinctive, curved contour. In this case, the light guide component can be arranged at least in sections within the border area of the field of view of the main lighting module, so that light emitted during operation of the main lighting module passes through the light guide component in the transverse direction. The problem arises that the outcoupling elements on the rear side of the light guide component facing the main lighting module lead to scattering and refraction of the light radiated by the main lighting module, so that the overall light impression of the lighting device is undesirably adversely affected.

### DISCLOSURE OF THE INVENTION

It is an object of the present invention to propose a vehicle lighting device with a main lighting module and a secondary lighting module with a light guide component, in which the light guide component is arranged within the field of view of the main lighting module, and which is characterized in particular by essentially undisturbed beam propagation of light radiated by the main lighting module when passing transversally through the light guide component. In the context of the present invention, the field of view of the main lighting module is understood to be the radiation area, i.e., the spatial area into which the main lighting module radiates light during operation.

This object is achieved by a vehicle lighting device as taught by claim 1 of the present invention. Advantageous embodiments of the invention are defined in the subclaims.

The invention discloses the technical teaching that the outcoupling elements at the rear side of the light guide component feature truncated shapes with plane end faces, the plane end faces being oriented parallel to the front side of the light guide component and/or perpendicular to the main radiation direction of the main lighting module and/or inclined in an intermediate orientation, wherein the shape, the dimensions and the spacing of the outcoupling elements vary along the light guide component.

The basic idea of the invention is to provide the outcoupling elements with plane end faces and to align these with respect to the main radiation direction of the main lighting module in such a way that scattering and refraction occur only to a comparatively small extent during the transverse passage of light through the light guide component. The plane end faces of the outcoupling elements are preferably oriented parallel to the front side of the light guide component and perpendicular to the main radiation direction, so that light propagating along the main radiation direction does not experience any deflection. If the front side of the light guide component is not oriented perpendicular to the main radiation direction, only a slight parallel shift of the transmitted light occurs. Furthermore, the orientation of the plane end faces of the outcoupling elements can deviate from a parallel alignment to the front side of the light guide component and, in particular, can be directed perpendicular to the main radiation direction. Generally, any intermediate orientation of the plane end faces of the outcoupling elements can be suitable within the scope of the invention, i.e., any inclination of the plane end faces between an alignment parallel to the front side of the light guide component and a perpendicular orientation to the main radiation direction. For example, a dedicated light deflection effect for light emitted along the main radiation direction can be implemented by suitable orientation of the plane end faces of the outcoupling elements, which can be particularly useful for the peripheral areas of the field of view of the main lighting module.

The modification of the shape of the outcoupling elements according to the invention can have a detrimental effect on the outcoupling efficiency of light guided within the light guide component, so that in the specific application a suitable compromise must be formed in each case, which ensures an undisturbed passage of the light radiated by the main lighting module on the one hand and a sufficient light outcoupling from the light guide component on the other hand each to the required extent. For this purpose, in particular the extent of the truncation of the outcoupling elements can be suitably selected. According to the invention there is a dedicated variation in the detailed shape, dimensions and spacing of the outcoupling elements along the light guide component. In particular, the orientation of the plane end faces of the outcoupling elements relative to the main radiation direction of the main lighting module may also vary along the light guide component.

The light guide component is preferably made of silicone, PMMA, PC or any other light transmitting material, in particular by means of an injection moulding process.

In preferred embodiments, the outcoupling elements feature the shape of truncated cones, truncated pyramids, truncated hemispheres, truncated ellipsoidal segments and/or truncated free-form bodies, the plane end faces being formed by the truncation. As mentioned above, the shape and dimensions of the outcoupling elements should be adapted to the specific requirements of the respective vehicle lighting device of use, for example, the shape of the outcoupling elements can also vary along the light guide component.

Furthermore, the orientation of the plane end faces with respect to the main radiation direction of the main lightning module and/or with respect to the front side of the light guide component may vary among the outcoupling elements. For example, the light guide component features an elongated, curved shape in such a way that the orientation of the front side and the orientation of the plane end faces of the outcoupling elements vary along the elongation of the light guide component with respect to the main radiation direction.

In particular, the outcoupling elements protrude at the rear side of the light guide component by a height in the range of 0,05 mm to 5 mm and/or the outcoupling elements feature a lateral size in the range of 0,05 mm to 5 mm. These dimensions allow individual configurability and adaptability of the outcoupling elements to the respective lighting functions to be fulfilled; furthermore, components of these dimensions can be conveniently produced using common injection moulding processes.

The body of the light guide component for instance features the shape of a rod, a plate or a free-form body. The basic idea of the present invention is applicable to waveguides of essentially any shape, so that the shape of the body of the light guide component can be chosen according to the specific application. In particular, the body of the light guide component can be bent or feature a curved shape. If the light guide component features a curved front side, the local surface normal provides the reference orientation for the alignment of the plane end faces of the associated outcoupling elements.

Exemplarily, the vehicle lighting device is designed as a vehicle headlight and the main lighting module is designed as a low-beam lighting module.

### PREFERRED EMBODIMENTS

Additional details, characteristics and advantages of the object of the invention are disclosed in the following description of the respective figures - which in an exemplary fashion - show preferred embodiments of the invention. It is obvious to the person skilled in the art that the proportions in all figures are not shown true to the original, but that they are purely schematic representations for the purpose of illustration.
- Fig. 1:: a schematic cross-sectional view of a prior art vehicle lighting device,
- Fig. 2a, 2b:: schematic cross-sectional views of a vehicle lighting device, which does not show all features according to the invention,
- Fig. 3:: a schematic cross-sectional view of a vehicle lighting device according to the invention,
- Fig. 4:: a schematic cross-sectional view of another vehicle lighting device, which does not show all features according to the invention, and
- Fig. 5:: a schematic cross-sectional view of a light guide component according to the invention.

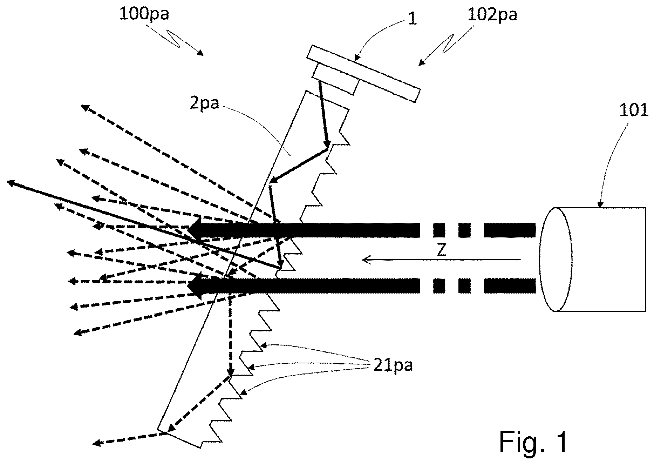

Fig. 1 shows a schematic cross-sectional view of a part of a prior art vehicle lighting device 100pa. This features the main lighting module 101 and the secondary lighting module 102pa, which comprises the light source 1 and the light guide component 2pa, the light guide component 2pa being arranged in sections within the field of view of the main lighting module 101, so that light emitted by the main lighting module 101 about the main radiation direction Z (thick arrows) passes through the light guide component 2pa. The light guide component 2pa features conical outcoupling elements 21pa which serve to decouple, i.e., deflect the light of the light source 1 propagating within the light guide component 2pa (thin, solid arrows). The tips of the outcoupling elements 21pa act as scattering centres for the incident light of the main light module 101 and the flanks of the outcoupling elements 21pa produce light deflection by refraction (dashed arrows). The task underlying the present invention is to significantly reduce the interference of the light of the main lighting module 101 passing transversely through the light guide component 2pa by the outcoupling elements 21pa.

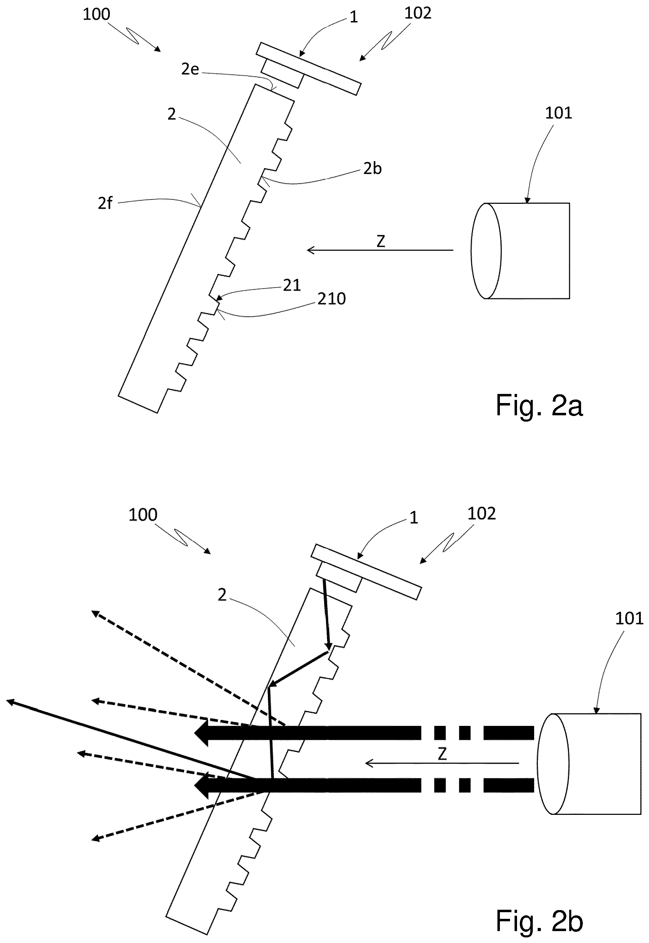

Fig. 2a shows a schematic cross-sectional view of a vehicle lighting device 100, which does not show all features according to the invention. The vehicle lighting device 100 features the main lighting module 101 for light radiation along the main radiation direction Z, and the secondary lighting module 102 with the light source 1 and the light guide component 2, the light source 1 being set up to radiate light into the light guide component 2 via the end face 2e and the light guide component 2 featuring outcoupling elements 21 protruding at the rear side 2b for light outcoupling out of the opposite front side 2f of the light guide component 2. The light guide component 2 is arranged in front of the main lighting module 101 in such a way that at least a part of the light guide component 2 is arranged within the field of view of the main lighting module 101. The outcoupling elements 21 feature truncated shapes with plane end faces 210, the plane end faces 210 being oriented parallel to the front side 2f of the light guide component 2. The shape of the outcoupling elements 21 is based on cones, and the plane end faces 210 are introduced by truncation of said cones.

Fig. 2b shows a representation corresponding to Fig. 2a, in which simplified schematic light beam paths are sketched. The undesired light scattering or refraction (dashed arrows) during the transverse passage of the light emitted by the main lighting module 101 (thick arrows) is significantly reduced in comparison to a corresponding prior art lighting device (see Fig. 1), since the outcoupling elements 21 are truncated with the plane end faces 210, which neither act as strong scattering centres nor contribute to pronounced refraction.

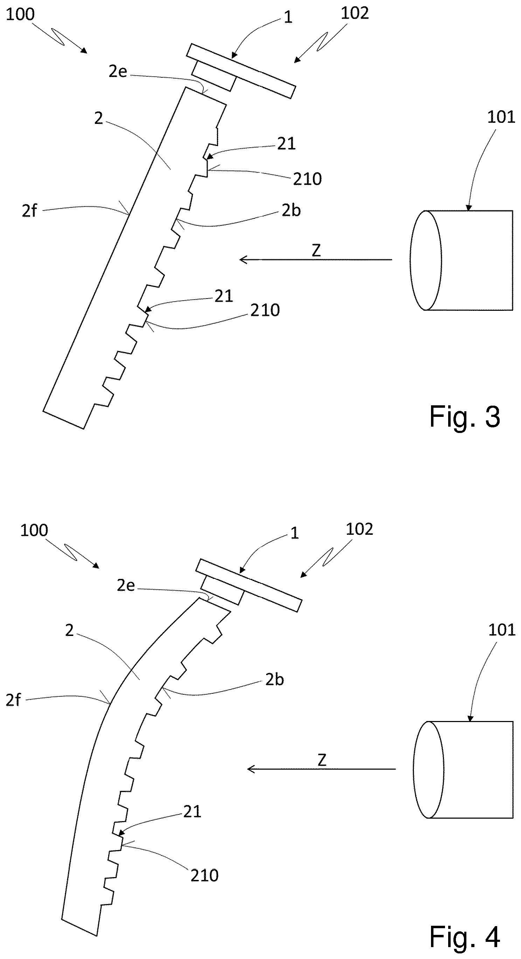

Fig. 3 and Fig. 4 show schematic cross-sectional views of a vehicle lighting device 100, wherein the embodiment of Fig. 4 does not show all features according to the invention, the reference signs corresponding to those mentioned above in connection with the description of Fig. 2a.

In the embodiment according to the invention of Fig. 3, the orientation of the plane end faces 210 with respect to the main radiation direction Z and the front side 2f of the light guide component 2 varies among the outcoupling elements 21. The first and the second outcoupling elements 21 (counted from the end face 2e) exhibit plane end faces 210 which are oriented perpendicular to the main radiation direction Z of the main lighting module 101. From the fourth outcoupling element 210 onwards, the end faces 210 are oriented parallel to the front face 2f of the light guide component 2, and the end face 210 of the third outcoupling element 21 features an intermediate orientation, i.e., an orientation which is neither parallel to the front face 2f nor perpendicular to the main radiation direction Z. By varying the orientation of the end faces 210 of the decoupling elements 21 along the light guide component 2 in this way, a beneficial light directing effect can be imparted on the light emitted by the main lighting module 101 and transmitted through the light guide component 2.

In the embodiment of Fig. 4, the light guide component 2 features an elongated, curved shape in such a way that the orientation of the front side 2f and the orientation of the plane end faces 210 of the outcoupling elements 21 vary along the elongation of the light guide component 2 with respect to the main radiation direction Z. The end faces 210 are oriented along the light guide component 2 in such a way that they always have an approximately parallel orientation to the associated, i.e., opposite section of the front face 2f of the light guide component 2.

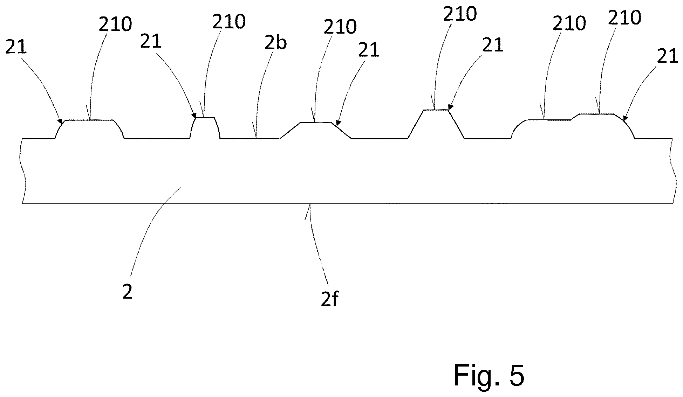

Fig. 5 shows a schematic cross-sectional view of a section of a light guide component 2 according to the invention, which exemplarily features different truncated outcoupling elements 21. Viewed from left to right, these take the shape of a truncated hemisphere, a truncated ellipsoidal segment, a truncated pyramid, a truncated cone and a truncated free-form body. For the individual adaptation of the light guide component 2 in a vehicle lighting device according to the invention, a suitable selection can be made, for example, from the shapes of the outcoupling elements 21 shown in Fig. 5. Furthermore, the dimensions, spacings and the density of the outcoupling elements 21 on the rear side 2b of the light guide component 2 can be appropriately chosen.

The body of the light guide component 2 in any of the figures can be for instance rod-shaped or plate-shaped or be given by a dedicated free-form body.

### List of Numerals

- 100: vehicle lighting device
- 100pa: prior art vehicle lighting device
- 101: main lighting module
- 102: secondary lighting module
- 102pa: prior art secondary lighting module
- 1: light source
- 2: light guide component
- 2pa: prior art light guide component
- 2f: front side
- 2b: rear side
- 2e: end face
- 21: outcoupling element
- 21pa: prior art outcoupling element
- 210: end face
- Z: main radiation direction

## Claims

1. Vehicle lighting device (100) featuring
- a main lighting module (101) for light radiation along a main radiation direction (Z), and
- a secondary lighting module (102) with a light source (1) and a light guide component (2), the light source (1) being set up to radiate light into the light guide component (2) via an end face (2e) and the light guide component (2) featuring outcoupling elements (21) protruding at the rear side (2b) for light outcoupling out of the opposite front side (2f) of the light guide component (2),
the light guide component (2) being arranged in front of the main lighting module (101) in such a way that at least a part of the light guide component (2) is arranged within the field of view of the main lighting module (101), wherein the outcoupling elements (21) feature truncated shapes with plane end faces (210), the plane end faces (210) being oriented parallel to the front side (2f) of the light guide component (2) and/or perpendicular to the main radiation direction (Z) and/or inclined in an intermediate orientation, **characterised in that** the shape, the dimensions and the spacing of the outcoupling elements (21) vary along the light guide component (2).

2. Vehicle lighting device (100) according to claim 1, **characterised in that** the outcoupling elements (21) feature the shape of truncated cones, truncated pyramids, truncated hemispheres, truncated ellipsoidal segments and/or truncated free-form bodies, the plane end faces (210) being formed by the truncation.

3. Vehicle lighting device (100) according to claim 1 or 2, **characterised in that** the orientation of the plane end faces (210) with respect to the main radiation direction (Z) and/or the front side (2f) of the light guide component (2) varies among the outcoupling elements (21).

4. Vehicle lighting device (100) according to one of the previous claims, **characterised in that** the light guide component (2) features an elongated, curved shape in such a way that the orientation of the front side (2f) and the orientation of the plane end faces (210) of the outcoupling elements (21) vary along the elongation of the light guide component (2) with respect to the main radiation direction (Z).

5. Vehicle lighting device (100) according to one of the previous claims, **characterised in that** the outcoupling elements (21) protrude at the rear side (2b) of the light guide component (2) by a height in the range of 0,05 mm to 5 mm.

6. Vehicle lighting device (100) according to one of the previous claims, **characterised in that** the outcoupling elements (21) feature a lateral size in the range of 0,05 mm to 5 mm.

7. Vehicle lighting device (100) according to one of the previous claims, **characterised in that** the body of the light guide component (2) features the shape of a rod, a plate or a free-form body.

8. Vehicle lighting device (100) according to one of the previous claims, **characterised in that** the vehicle lighting device (100) is designed as a headlight and the main lighting module (101) is designed as a low-beam lighting module.

## Patentansprüche

1. Beleuchtungseinrichtung (100) für ein Fahrzeug, umfassend:
- ein Hauptbeleuchtungsmodul (101) für Lichtstrahlung entlang einer Hauptstrahlungsrichtung (Z), und
- ein sekundäres Beleuchtungsmodul (102) mit einer Lichtquelle (1) und einer Lichtleitkomponente (2), wobei die Lichtquelle (1) dazu konfiguriert ist, über eine Abschlussfläche (2e) Licht in die Lichtleitkomponente (2) zu strahlen und die Lichtleitkomponente (2) Auskopplungselemente (21) aufweist, die an der Rückseite (2b) für Lichtauskopplung von der gegenüberliegenden Vorderseite (2f) der Lichtleitkomponente (2) vorstehen,
wobei die Lichtleitkomponente (2) in einer solchen Weise vor dem Hauptbeleuchtungsmodul (101) angeordnet ist, dass mindestens ein Teil der Lichtleitkomponente (2) innerhalb des Sichtfeldes des Hauptbeleuchtungsmoduls (101) angeordnet ist, wobei die Auskopplungselemente (21) abgeschnittene Formen mit ebenen Abschlussflächen (210) aufweisen und die ebenen Abschlussflächen (210) parallel zur Vorderseite (2f) der Lichtleitkomponente (2) und/oder senkrecht zur Hauptstrahlungsrichtung (Z) und/oder in einer Zwischenausrichtung geneigt ausgerichtet sind, **dadurch gekennzeichnet, dass** die Form, die Abmessungen und die Abstände der Auskopplungselemente (21) entlang der Lichtleitkomponente (2) variieren.

2. Beleuchtungseinrichtung (100) für ein Fahrzeug nach Anspruch 1, **dadurch gekennzeichnet, dass** die Auskopplungselemente (21) die Form abgeschnittener Kegel, abgeschnittener Pyramiden, abgeschnittener Halbkugeln, abgeschnittener ellipsenförmiger Segmente und/oder abgeschnittener Freiformkörper aufweisen, wobei die ebenen Abschlussflächen (210) durch das Abschneiden gebildet sind.

3. Beleuchtungseinrichtung (100) für ein Fahrzeug nach Anspruch 1 oder 2, **dadurch gekennzeichnet, dass** die Ausrichtung der ebenen Abschlussflächen (210) mit Bezug auf die Hauptstrahlungsrichtung (Z) und/oder die Vorderseite (2f) der Lichtleitkomponente (2) unter den Auskopplungselementen (21) variiert.

4. Beleuchtungseinrichtung (100) für ein Fahrzeug nach einem der vorhergehenden Ansprüche, **dadurch gekennzeichnet, dass** die Lichtleitkomponente (2) in einer solchen Weise eine längliche, gewölbte Form aufweist, dass die Ausrichtung der Vorderseite (2f) und die Ausrichtung der ebenen Abschlussflächen (210) der Auskopplungselemente (21) entlang der Ausdehnung der Lichtleitkomponente (2) in Bezug auf die Hauptstrahlungsrichtung (Z) variieren.

5. Beleuchtungseinrichtung (100) für ein Fahrzeug nach einem der vorhergehenden Ansprüche, **dadurch gekennzeichnet, dass** die Auskopplungselemente (21) an der Rückseite (2b) der Lichtleitkomponente (2) um eine Höhe im Bereich von 0,05 mm bis 5 mm vorstehen.

6. Beleuchtungseinrichtung (100) für ein Fahrzeug nach einem der vorhergehenden Ansprüche, **dadurch gekennzeichnet, dass** die Auskopplungselemente (21) eine laterale Größe im Bereich von 0,05 mm bis 5 mm aufweisen.

7. Beleuchtungseinrichtung (100) für ein Fahrzeug nach einem der vorhergehenden Ansprüche, **dadurch gekennzeichnet, dass** der Körper der Lichtleitkomponente (2) die Form eines Stabes, einer Platte oder eines Freiformkörpers aufweist.

8. Beleuchtungseinrichtung (100) für ein Fahrzeug nach einem der vorhergehenden Ansprüche, **dadurch gekennzeichnet, dass** die Beleuchtungseinrichtung (100) für ein Fahrzeug als ein Scheinwerfer gestaltet ist und das Hauptbeleuchtungsmodul (101) als ein Abblendlicht-Beleuchtungsmodul gestaltet ist.

## Revendications

1. Dispositif d'éclairage de véhicule (100) comprenant
- un module d'éclairage principal (101) pour le rayonnement de la lumière le long d'une direction de rayonnement principale (Z) et
- un module d'éclairage secondaire (102) avec une source de lumière (1) et un composant guide de lumière (2), la source de lumière (1) étant conçue pour émettre de la lumière dans le composant guide de lumière (2) via une face d'extrémité (2e) et le composant guide de lumière (2) comportant des éléments de découplage (21) faisant saillie sur la face arrière (2b) pour le découplage de la lumière hors de la face avant opposée (2f) du composant guide de lumière (2),
le composant guide de lumière (2) est disposé devant le module d'éclairage principal (101) de manière à ce qu'au moins une partie du composant guide de lumière (2) se trouve dans le champ de vision du module d'éclairage principal (101), les éléments de découplage (21) présentant des formes tronquées avec des faces d'extrémité planes (210), les faces frontales planes (210) étant orientées parallèlement à la face avant (2f) du composant guide de lumière (2) et/ou perpendiculairement à la direction de rayonnement principale (Z) et/ou inclinées dans une orientation intermédiaire, **caractérisé en ce que** la forme, les dimensions et l'espacement des éléments de découplage (21) varient le long du composant guide de lumière (2).

2. Dispositif d'éclairage de véhicule (100) selon la revendication 1, **caractérisé en ce que** les éléments de découplage (21) ont la forme de cônes tronqués, de pyramides tronquées, d'hémisphères tronqués, de segments ellipsoïdaux tronqués et/ou de corps libres tronqués, les faces d'extrémité planes (210) étant formées par la troncature.

3. Dispositif d'éclairage de véhicule (100) selon la revendication 1 ou 2, **caractérisé en ce que** l'orientation des faces d'extrémité planes (210) par rapport à la direction de rayonnement principale (Z) et/ou à la face avant (2f) du composant guide de lumière (2) varie entre les éléments de découplage (21).

4. Dispositif d'éclairage de véhicule (100) selon l'une des revendications précédentes, **caractérisé en ce que** le composant guide de lumière (2) présente une forme allongée et incurvée de telle sorte que l'orientation de la face avant (2f) et l'orientation des faces d'extrémité planes (210) des éléments de découplage (21) varient le long de l'allongement du composant guide de lumière (2) par rapport à la direction de rayonnement principale (Z).

5. Dispositif d'éclairage de véhicule (100) selon l'une des revendications précédentes, **caractérisé en ce que** les éléments de découplage (21) font saillie sur la face arrière (2b) du composant guide de lumière (2) d'une hauteur comprise entre 0,05 mm et 5 mm.

6. Dispositif d'éclairage de véhicule (100) selon l'une des revendications précédentes, **caractérisé en ce que** les éléments de découplage (21) présentent une taille latérale comprise entre 0,05 mm et 5 mm.

7. Dispositif d'éclairage de véhicule (100) selon l'une des revendications précédentes, **caractérisé en ce que** le corps du composant guide de lumière (2) a la forme d'une tige, d'une plaque ou d'un corps de forme libre.

8. Dispositif d'éclairage de véhicule (100) selon l'une des revendications précédentes, **caractérisé en ce que** le dispositif d'éclairage de véhicule (100) est conçu comme un phare et le module d'éclairage principal (101) comme un module d'éclairage pour feux de croisement.
